(19) Europäisches Patentamt
European Patent Office
Office européen des brevets

(11) EP 2 749 631 A1

(12) **EUROPEAN PATENT APPLICATION**
published in accordance with Art. 153(4) EPC

(43) Date of publication:
**02.07.2014 Bulletin 2014/27**

(21) Application number: **12826998.2**

(22) Date of filing: **24.08.2012**

(51) Int Cl.:
***C10M 169/02*** *(2006.01)* ***C10M 105/04*** *(2006.01)*
***C10M 105/18*** *(2006.01)* ***C10M 105/32*** *(2006.01)*
***C10M 107/02*** *(2006.01)* ***C10M 115/08*** *(2006.01)*
***C10N 20/02*** *(2006.01)* ***C10N 30/00*** *(2006.01)*
***C10N 30/06*** *(2006.01)* ***C10N 40/02*** *(2006.01)*
***C10N 50/10*** *(2006.01)*

(86) International application number:
**PCT/JP2012/071509**

(87) International publication number:
**WO 2013/031705 (07.03.2013 Gazette 2013/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2011 JP 2011184987**
**26.08.2011 JP 2011184988**
**26.09.2011 JP 2011209410**
**28.12.2011 JP 2011289571**
**28.12.2011 JP 2011289572**
**22.05.2012 JP 2012116841**

(71) Applicant: **NSK Ltd.**
**Tokyo 141-8560 (JP)**

(72) Inventors:
- **INAMI Noriyuki**
**Fujisawa-shi**
**Kanagawa 251-8501 (JP)**
- **YOKOUCHI Atsushi**
**Fujisawa-shi**
**Kanagawa 251-8501 (JP)**
- **HOKAO Michita**
**Fujisawa-shi**
**Kanagawa 251-8501 (JP)**
- **NAKATANI Shinya**
**Fujisawa-shi**
**Kanagawa 251-8501 (JP)**
- **KANDA Haruka**
**Fujisawa-shi**
**Kanagawa 251-8501 (JP)**
- **SOGA Kazuhiro**
**Fujisawa-shi**
**Kanagawa 251-8501 (JP)**
- **MIYAGAWA Takayuki**
**Fujisawa-shi**
**Kanagawa 251-8501 (JP)**

(74) Representative: **Grünecker, Kinkeldey, Stockmair & Schwanhäusser**
**Leopoldstrasse 4**
**80802 München (DE)**

# (54) GREASE COMPOSITION AND ROLLING DEVICE

(57) The present invention relates to: a grease composition that includes a base oil which has a pressure-viscosity coefficient as measured at 40°C of 33 $GPa^{-1}$ or less and a thickener which is contained in a projected-area proportion of 10% by area or higher; and a rolling device packed with the grease composition.

FIG. 1

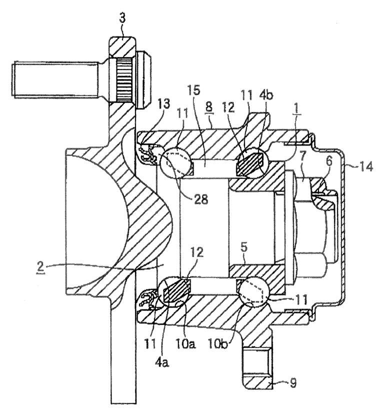


EP 2 749 631 A1

## Description

### Technical Field

The present invention relates to a grease composition which has water resistance and is packed into bearings for use in environments where the bearings come into contact with water. The invention further relates to a rolling device packed with the grease composition.

### Background Art

Hitherto, the so-called "hub unit bearing" of the sealed type equipped with a seal, such as, for example, the bearing shown in Fig. 1, is in frequent use as bearings for vehicles such as motor vehicles and railroad cars. In the hub unit bearing shown in Fig. 1, an outward flange 3 for fixing a wheel (not shown) has been formed on the peripheral surface of the outer end part (left-hand-side end part in the figure) of the hub 2, which constitutes an inner-ring-corresponding member in cooperation with an inner-ring element 1, and an inner ring raceway 4a and a step 5 have been formed in the peripheral surface of the intermediate part. Furthermore, the inner-ring element 1 in which an inner ring raceway 4b has been likewise formed in the peripheral surface thereof has been fitted from outside to the peripheral surface of the inner-end-side portion (right-hand-side portion in the figure) of the intermediate part of the hub 2 and supported thereby so that the outer-end surface (left-hand-side end surface in the figure) thereof butts to the step 5.

Moreover, a male screw portion 6 has been formed in the inner-end-side part of the hub 2. A nut 7 is screwed onto the mail screw portion 6 and tightened to thereby fix the inner-ring element 1 to the given portion of the peripheral surface of the hub 2. An attachment part 9 in an outward flange form, which is for fixing the outer ring 8 disposed around the hub 2 to a suspension device (not shown), has been provided to the peripheral surface of the intermediate part of the outer ring 8. Furthermore, outer ring raceways 10a and 10b which respectively face the inner ring raceways 4a and 4b have been formed in the inner peripheral surface of the outer ring 8. A plurality of rolling elements 11 and 11 have been disposed between each of raceway pairs configured of the inner ring raceways 4a and 4b and outer ring raceways 10a and 10b, so that the hub 2 is rendered freely rotatable within the outer ring 8. These rows of rolling elements 11 and 11 are freely rollably held respectively by cages 12 and 12.

Moreover, a seal ring 13 made of an elastic material represented by a nitrile-based rubber composition has been fitted into the space between the inner peripheral surface of the outer-end part (left-hand-side end part in the figure) of the outer ring 8 and the peripheral surface of the hub 2. This seal ring 13 closes the outer-end opening 28 of the space 15 which has been formed between the inner peripheral surface of the outer ring 8 and the peripheral surfaces of the hub 2 and inner-ring element 1 and in which the multiple rolling elements 11 and 11 have been disposed. Furthermore, the inner-end (right-hand end in the figure) opening of the outer ring 8 is closed with a cover 14, thereby preventing foreign matter including dust particles and rainwater from coming into the space 15 through the inner-end opening and preventing the grease (not shown) packed into the space 15 from leaking out.

In motor vehicles, unit bearings including a double-row ball bearing, such as that shown in the figure, are used. However, in large motor vehicles, unit bearings including a double-row tapered roller bearing in which tapered rollers are employed as the rolling elements 11 shown in Fig. 1 are frequently used. In railroad cars, use is frequently made of either bearing units including a similar tapered roller bearing or bearing units including a double-row cylindrical roller bearing in which cylindrical rollers are employed as the rolling elements 11.

Such bearings are being desired to be improved because of the recent trend toward energy saving. For example, a rolling bearing unit for wheel supporting in which a grease having a kinematic viscosity at 100°C of $5.0\times10^{-6}$ to $9.0\times10^{-6}$ $m^2/s$ (5-9 cSt) is used is proposed in Patent Document 1.

### Background Art Document

Patent Document

Patent Document 1: JP-A-2003-239999

### Summary of Invention

#### Problem that Invention is to Solve

However, the grease described in Patent Document 1, although effective in reducing the torque of rolling bearing units for wheel supporting, has tended to be less apt to ensure a sufficient oil film thickness on friction surfaces because the base oil has a lower viscosity than conventional base oils. There has hence been a possibility that in the case where the grease is used under higher-load conditions or higher-temperature conditions than conventional ones, the rolling

bearing unit for wheel supporting might have an insufficient durability life. Consequently, in the case of attempting to advance the performance of rolling bearing units for wheel supporting by using a means concerning design, there has been room for investigation because the grease described in Patent Document 1 is not applicable to rolling bearing units for wheel supporting of all designs.

Furthermore, the hub unit bearings of a vehicle not only bear the mass of the vehicle through the tires but also receive radial, thrust, and momental load and impact load due to the contact of the tires with the ground in accordance with the running state of the vehicle. Consequently, the bearings are prone to wear. Although the method conventionally used for wear prevention is to increase the viscosity of the base oil to form a thick lubricating oil film, a sufficient effect has not been obtained therewith and there has been room for investigation.

Another problem is as follows. In vehicles and the like, since vibrations resulting from driving are transmitted also to the rolling bearings, fretting wear due to repeated impacts is apt to occur between the rolling elements 11 and the inner and outer ring raceways 4a, 4b, 10a, and 10b. There are also cases where during transportation of vehicles by freight cars, the bearings suffer microvibrations, etc. and are worn thereby, resulting in the occurrence of the phenomenon called fretting. The conventional mineral oil-lithium soap grease is not considered to have sufficient durability in terms of the fretting wear (fretting resistance), and there has been room for investigation.

In addition, hubs are being required to meet both steering stability (steerability and stability) and an increase in fuel efficiency, and are being further required to satisfy such a property that changes in bearing torque are small as compared with changes in the pressure applied to the hub bearings.

The invention has been achieved in view of those problems. An object of the invention is to provide a grease composition which is excellent in terms of low-torque characteristics, wear resistance, low-temperature fretting resistance, water resistance, low-friction characteristics, and low-leakage characteristics after packing into bearings and which can maintain a satisfactory lubricating state over a long period. Another object is to provide a rolling device packed with the grease composition.

Means for Solving Problem

The present inventors diligently made investigations in order to overcome the problems. As a result, the inventors have found that the pressure-viscosity coefficient of the base oil and the dispersed state of the thickener exert considerable influences.

The present invention is based on that finding made by the present inventors, and provides the following grease composition and rolling device in order to eliminate the problems described above.

(1) A grease composition characterized by including a base oil which has a pressure-viscosity coefficient as measured at 40°C of 33 $GPa^{-1}$ or less and a thickener which is contained in a projected-area proportion of 10% by area or higher.
(2) A rolling device characterized by including an inner ring, an outer ring and a plurality of rolling elements freely rollably held between the inner ring and the outer ring by means of a cage, and by being packed with the grease composition according to (1) above.

The projected-area proportion of the thickener herein is the proportion of the area occupied by the fibers and particles of the thickener present in the field of view when the grease composition having a thickness of 0.1 mm is photographed with an optical microscope. In the photograph of the grease composition taken with an optical microscope, the fibers and particles of the thickener are black and the base oil is transparent or white. Consequently, the photograph taken with an optical microscope is subjected to binarization to calculate the areal proportion of black portions in the field of view. Thus, the projected-area proportion of the thickener is determined.

It is preferred that the grease composition should have the following configurations.

(1) The thickener is a diurea compound represented by the following general formula (I) or general formula (II), in particular, an aromatic diurea compound represented by the following general formula (I), and the amount of the thickener is 10-40% by mass based on the whole grease composition.

$$R_2\text{-NHCONH-}R_1\text{-NHCONH-}R_3 \qquad \text{General formula (I)}$$

(In general formula (I), $R_1$ represents an aromatic hydrocarbon group having 6-15 carbon atoms, and $R_2$ and $R_3$ each represent an aromatic hydrocarbon group having 6-12 carbon atoms. $R_2$ and $R_3$ may be the same or different.)

$$R_5\text{-NHCONH-}R_4\text{-NHCONH-}R_6 \qquad \text{General formula (II)}$$

(In general formula (II), $R_4$ represents an aromatic hydrocarbon group having 6-15 carbon atoms, and $R_5$ and $R_6$

each represent an aliphatic hydrocarbon group having 6-20 carbon atoms or a cyclohexyl derivative group having 6-12 carbon atoms. The proportion of the cyclohexyl derivative group in the whole $R_5$ and $R_6$ moieties is 50-90% by mole. $R_5$ and $R_6$ may be the same or different.)

(2) The grease composition contains a rust preventive and an antiwear agent as additives.

(3) The rust preventive is a carboxylic acid-based rust preventive, a carboxylic acid salt-based rust preventive or an amine-based rust preventive.

(4) The antiwear agent is triphenyl phosphorothioate.

(5) The grease composition has a pour point of -35°C or lower and a kinematic viscosity of 70-150 $mm^2/s$.

(6) The base oil is a mixed oil composed of a mineral oil and a synthetic oil in such a mixing ratio (% by mass) that (mineral oil):(synthetic oil) = 0:100 to 20:80.

(7) The rust preventive is constituted of three rust preventives, i.e., a carboxylic acid-based rust inhibiting additive, a carboxylic acid salt-based rust inhibiting additive and an amine-based rust preventive, and the content of the three rust preventives is 1% by mass or higher based on the whole grease.

Effects of Invention

The grease composition of the invention is excellent in terms of low-torque characteristics, wear resistance, low-temperature fretting resistance, water resistance, low-friction characteristics, and low-leakage characteristics after packing into bearings and can maintain a satisfactory lubricating state over a long period. Furthermore, the rolling device of the invention, which has been packed with such grease composition, shows excellent lubricating performance even in environments where the rolling device comes into contact with, in particular, water, and has a prolonged life.

Brief Description of Drawing

[Fig. 1] Fig. 1 is a cross-sectional view which illustrates one example of hub unit bearings for vehicles.

Mode for Carrying Out Invention

The invention will be explained below in detail by reference to the drawing.

[Grease Composition]

The grease composition includes a base oil, a thickener, a rust preventive, and an antiwear agent.

<Base Oil>

Preferred as the base oil is a mineral oil, a synthetic oil, or a mixed oil including these oils. In the case of using the mixed oil, it is preferred that the mixing ratio (% by mass) between the mineral oil and the synthetic oil should be such that (mineral oil):(synthetic oil) = 0:100 to 20:80. In case where the proportion of the synthetic oil is less than 80% by mass, satisfactory torque characteristics and heat resistance cannot be maintained.

Examples of the mineral oil include paraffinic mineral oils and naphthenic mineral oils which have been purified by a suitable combination of vacuum distillation, lubricant deasphalting, solvent extraction, hydrocracking, solvent dewaxing, sulfuric acid treatment, clay treatment, hydrofining, etc.

Examples of the synthetic oil include hydrocarbon oils, aromatic oils, ester oils, and ether oils. It is preferred to employ hydrocarbon oils among such synthetic oils, from the standpoint that hydrocarbon oils bring about satisfactory torque characteristics and enable the bearing rubber seals to have satisfactory durability. Specific examples of the hydrocarbon oils include normal paraffins, isoparaffins, poly($\alpha$-olefin)s such as polybutene, polyisobutylene, 1-decene oligomers, and co-oligomers of 1-decene and ethylene, or products of hydrogenation of these oils.

Examples of the aromatic oils include alkylbenzenes such as monoalkylbenzenes and dialkylbenzenes or alkylnaphthalenes such as monoalkylnaphthalenes, dialkylnaphthalenes, and polyalkylnaphthalenes.

Examples of the ester oils include diester oils such as dibutyl sebacate, di-2-ethylhexyl sebacate, dioctyl adipate, diisodecyl adipate, ditridecyl adipate, ditridecyl glutarate, and methyl acetylcinolate, aromatic ester oils such as trioctyl trimellitate, tridecyl trimellitate, and tetraoctyl pyromellitate, polyol ester oils such as trimethylolpropane caprylate, trimethylolpropane belargonate, pentaerythritol 2-ethylhexanoate, and pentaerythritol belargonate, and complex ester oils which are oligoesters of a polyhydric alcohol with a fatty acid mixture including a dibasic acid and a monobasic acid.

Examples of the ether oils include polyglycols such as polyethylene glycol, polypropylene glycol, polyethylene glycol monoethers, and polypropylene glycol monoethers or phenyl ether oils such as monoalkyl triphenyl ethers, alkyl diphenyl ethers, dialkyl diphenyl ethers, pentaphenyl ether, tetraphenyl ether, monoalkyl tetraphenyl ethers, and dialkyl

tetraphenyl ethers.

(Kinematic Viscosity)

From the standpoint of avoiding noise generation during low-sound starting or of avoiding the seizure which occurs at high temperatures because of difficulties in oil film formation, the kinematic viscosity at 40°C of the base oil is preferably 70-150 $mm^2/s$, more preferably 70-130 $mm^2/s$, especially preferably 70-100 $mm^2/sec$.

(Pour Point)

It is preferred that the base oil should have a pour point of -35°C or lower. In case where the pour point of the base oil exceeds -35°C, this grease composition is poor in low-temperature fretting wear.

It is, however, noted that base oils having a pour point lower than -57°C are difficult to procure and substantial pour points are -35 to -57°C.

(Permittivity)

In the case where the base oil consists only of one or more synthetic oils, it is preferred that the permittivity thereof as measured at 25°C and 1 MHz should be less than 4, from the standpoint of avoiding seizure and wear by improving oil film thickness. In case where the permittivity thereof is 4 or higher, this grease has a reduced areal proportion of thickener agglomerates therein and the effect of improving oil film thickness is not obtained. In the case where a mineral oil and a synthetic oil have been mixed together, the effect of improving oil film thickness can be obtained so long as the permittivity of the synthetic oil is less than 4 and the mixing ratio (% by mass) is such that (mineral oil):(synthetic oil) = 0:100 to 20:80.

It is, however, noted that base oils having a permittivity less than 1.9 are difficult to procure and substantial permittivities are 1.9 or higher but less than 4.

(Pressure-viscosity Coefficient)

The base oil has a pressure-viscosity coefficient as determined at 40°C of 33 $GPa^{-1}$ or less, and it is preferred that the pressure-viscosity coefficient thereof should be 27 $GPa^{-1}$ or less. In case where the pressure-viscosity coefficient at 40°C of the base oil exceeds 33 $GPa^{1}$, an increase in bearing torque results. Incidentally, the pressure-viscosity coefficient $\alpha$ at 40°C of a base oil can be calculated using the following So-Klaus prediction formula. In the following formula, $v_0$ is the kinematic viscosity at 40°C of the base oil, $m_0$ is the constant in the Walter equation ($v_0=(10^{AT})^{-m0}$-0.7), and $\rho$ is the density at 40°C of the base oil.

$$\alpha = 1.030 + 3.509(\log v_0)^{3.0627} + 2.412\times10^{-4} m_0^{5.1903}(\log v_0)^{1.5976} - 3.387(\log v_0)^{3.0975}\rho^{0.1162}$$

However, pressure-viscosity coefficients less than 23 $GPa^{-1}$ are undesirable because such values of the pressure-viscosity coefficient result in a decrease in oil film formation property (ratio of oil film thickness). Consequently, a preferred lower limit of the viscosity-pressure coefficient is 23 $GPa^{-1}$.

(Other Property)

With respect to other properties of the base oil, it is preferred that the base oil should have a viscosity index of 115-190. In case where the viscosity index thereof is less than 115, this base oil shows a high viscosity increase rate at low temperatures, resulting in the possibility of a decrease in low-temperature fretting resistance. In case where the viscosity index thereof exceeds 190, there is a possibility that the oil film formation properties (ratio of oil film thickness) might decrease. Incidentally, the viscosity index is determined by the method described in HIS K2283.6.

<Thickener>

Diurea compounds are suitable as the thickener. For example, use can be made of aliphatic diureas, alicyclic diureas, and aromatic diureas. When the fretting wear caused by vibrations due to driving is taken into account, it is preferred to use an aromatic diurea. It is preferred that the thickener should be contained in an amount of 10-40% by

mass based on the whole grease composition. In case where the content of the thickener is less than 10% by mass, it is difficult for the grease composition to retain the grease state and this grease composition is prone to leak out after having been packed into bearings. Meanwhile, in case where the content of the thickener exceeds 40% by mass, this grease composition is too hard to sufficiently exhibit a lubricating state. Such too high thickener contents are hence undesirable.

(Aromatic Diureas)

Preferred as the aromatic diureas specifically are diurea compounds represented by the following general formula (I). In the following general formula (I), $R_1$ represents an aromatic hydrocarbon group having 6-15 carbon atoms, and $R_2$ and $R_3$ each represent an aromatic hydrocarbon group having 6-12 carbon atoms. $R_2$ and $R_3$ may be the same or different.

In case where the content of a diurea compound represented by general formula (I) is less than 10% by mass, it is difficult for the grease composition to retain the grease state. Such too low contents thereof are hence undesirable. Meanwhile, in case where the content of the diurea compound represented by general formula (I) exceeds 40% by mass, this grease composition is too hard to sufficiently exhibit a lubricating state. Such too high contents thereof are hence undesirable.

$R_2$-NHCONH-$R_1$-NHCONH-$R_3$ General formula (I)

(Aliphatic Diurea and Alicyclic Diureas)

Preferred as the aliphatic diureas or alicyclic diureas specifically are diurea compounds represented by the following general formula (II). In the following general formula (II), $R_4$ represents an aromatic hydrocarbon group having 6-15 carbon atoms, and $R_5$ and $R_6$ each represent an aliphatic hydrocarbon group having 6-20 carbon atoms or a cyclohexyl derivative group having 6-12 carbon atoms; the proportion of the cyclohexyl derivative group in the whole $R_5$ and $R_6$ moieties is 50-90% by mole; and $R_5$ and $R_6$ may be the same or different.

In case where the content of a diurea compound represented by general formula (II) is less than 10% by mass, it is difficult for the grease composition to retain the grease state. Such too low contents thereof are hence undesirable. Meanwhile, in case where the content of the diurea compound represented by general formula (II) exceeds 30% by mass, this grease composition is too hard to sufficiently exhibit a lubricating state. Such too high contents thereof are hence undesirable.

$R_5$-NHCONH-$R_4$-NHCONH-$R_6$ General formula (II)

<Rust Preventive>

Preferred as the rust preventive are a carboxylic acid-based rust preventive, a carboxylic acid salt-based rust preventive, and an amine-based rust preventive. It is especially preferred to use these three kinds of rust preventives in combination. By using these three kinds of rust preventives in combination, water resistance can be improved more than before.

It is preferred that the content of the rust preventive(s) based on the whole grease composition should be 1% by mass or higher. Specifically, it is preferred that the content of the carboxylic acid-based rust preventive and that of the carboxylic acid salt-based rust preventive each should be 0.1-5% by mass based on the whole grease composition. In case where the addition amount thereof is less than 0.1% by mass, a sufficient effect is not obtained. Even when either of these rust preventives is added in an amount exceeding 5%, the effect is not improved. It is more preferred that the addition amounts of the carboxylic acid-based rust preventive and the carboxylic acid salt-based rust preventive should be 0.5-3% by mass. Meanwhile, it is preferred that the addition amount of the amine-based rust preventive should be 0.1-3% by mass based on the whole grease. In case where the addition amount of the amine-based rust preventive is less than 0.1% by mass, a sufficient effect is not obtained. Even when the amine-based rust preventive is added in an amount exceeding 3%, not only the effect is not improved but also the rust preventive is adsorbed in too large an amount onto the surfaces of members of the bearing, resulting in the possibility of inhibiting the formation of oxide films or the like derived from the packed grease.

(Carboxylic Acid-based Rust Preventive)

Examples of the carboxylic acid-based rust preventive include monocarboxylic acids such as linear fatty acids, e.g., lauric acid and stearic acid, and saturated carboxylic acids having a naphthene nucleus. Examples thereof further include dicarboxylic acids such as succinic acid, succinic acid derivatives, e.g., alkylsuccinic acids, half esters of alkyl succinic acids, alkenylsuccinic acids, half esters of alkenylsuccinic acids, and succinimide, hydroxy fatty acids, mercapto fatty acids, sarcosine derivatives, and waxes and oxidized waxes, e.g., oxidized petrolatum. Suitable of these are half esters of succinic acid.

(Carboxylic Acid Salt-based Rust Preventive)

Examples of the carboxylic acid salt-based rust preventive include metal salts of fatty acids, naphthenic acids, abietic acid, lanolin fatty acids, alkenylsuccinic acids, and amino acid derivatives. Examples of the metallic elements of the metal salts include cobalt, manganese, zinc, aluminum, calcium, barium, lithium, magnesium, and copper. Suitable of these are zinc naphthenates.

(Amine-based Rust Preventive)

Examples of the amine-based rust preventive include alkoxyphenylamines, amine salts of fatty acids, and partial amides of dibasic carboxylic acids. Suitable of these are amine salts of fatty acids.

<Antiwear Agent>

Preferred as the antiwear agent is a sulfur-phosphorus (SP) compound. Examples thereof include triphenyl phosphate compounds and dithiophosphate compounds. Suitable of these is triphenyl phosphorothioate (TPPT), which is represented by the following general formula (III).

[Chem. 1]

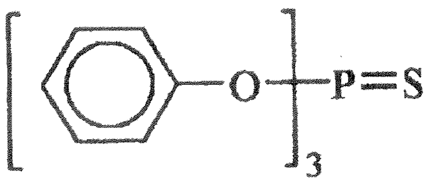

··· General formula (III)

It is preferred that the content of the antiwear agent should be 0.1-5% by mass based on the whole grease composition. In case where the content thereof is less than 0.1 % by mass, a sufficient effect is not obtained. Even when the content thereof exceeds 5%, the effect is not improved.

<Other Additives>

Other additives may be added to the grease composition according to need in order to further improve various performances. For example, an antioxidant, an extreme-pressure agent, an oiliness improver, a metal deactivator, and the like can be added either alone or as a mixture of two or more thereof.

The content (addition amount) of such other additives is not limited so long as the additives do not lessen the effects of the invention. However, the content thereof is preferably 0.1-20% by mass based on the whole grease composition. In case where the addition amount thereof is less than 0.1% by mass, the effects of the addition are insufficient. Even when the additives are added in an amount exceeding 20% by mass, not only the effects are not heightened anymore but also the amount of the base oil becomes relatively small, resulting in the possibility of a decrease in lubricity.

(Antioxidant)

Examples of the antioxidant include amine-based antioxidants, phenolic antioxidants, sulfur-compound antioxidants, and zinc dithiophosphate.

Examples of the amine-based antioxidants include phenyl-1-naphthylamine, phenyl-2-naphthylamine, diphenylamine, phenylenediamine, oleylamideamine, and phenothiazine.

Examples of the phenolic antioxidants include hindered phenols such as p-t-butylphenyl salicylate, 2,6-di-t-butyl-p-phenylphenol, 2,2'-methylenebis(4-methyl-6-t-octylphenol), 4,4'-butylidenebis-6-t-butyl-m-cresol, tetrakis[methylene-3-(3',5'-di-t-butyl-4'-hydroxyphenyl)propionato]methane, 1,3,5-trimethyl-2,4,6-tris(3,5-di-t-butyl-4-hydroxybenzyl)benzene, n-octadecyl β-(4'-hydroxy-3',5'-di-t-butylphenyl)propionate, 2-n-octylthio-4,6-di(4'-hydroxy-3',5'-di-t-butyl)phenoxy-1,3,5-triazine, 4,4'-thiobis(6-t-butyl-m-cresol), and 2-(2'-hydroxy-3'-t-butyl-5'-methylphenyl)-5-chlorobenzotriazole.

Furthermore, examples of the sulfur-compound oxidation inhibitors include bis[2-methyl-4-{3-n-(C12- or C14-alkyl)thiopropionyloxy}-5-t-butylphenyl] sulfide and dilauryl thiodipropionate.

(Extreme-pressure Agent)

Examples of the extreme-pressure agent include organomolybdenum compounds.

(Oiliness Improver)

Examples of the oiliness improver include fatty acids such as oleic acid and stearic acid, alcohols such as lauryl alcohol and oleyl alcohol, amines such as stearylamine and cetylamine, phosphoric acid esters such as tricresyl phosphate, and animal or vegetable oils.

(Metal Deactivator)

Examples of the metal deactivator include benzotriazole.

<Projected-area Proportion of the Thickener being 10% by area or higher>

In the grease composition described above, the projected-area proportion of the thickener is 10% by area or higher. So long as the projected-area proportion thereof is 10% by area or higher, the surfaces of the raceways are satisfactorily protected by the thickener and both the fretting wear occurring during transportation, etc. and decreases in oil film thickness occurring at high temperatures can be inhibited, thereby attaining a life prolongation. The projected-area proportion of the thickener is preferably 12% by area or higher. It is, however, noted that too high projected-area proportions of the thickener result in a relatively reduced base oil amount and hence in a decrease in lubricity. Consequently, a preferred upper limit is 50% by area.

<Process for producing the Grease Composition>

There are no particular limitations on processes for producing the grease composition, and suitable processes may be selected according to purposes. In general, however, the grease composition is obtained by reacting starting materials for a thickener (aromatic diurea compound) in a base oil, thereafter adding a rust preventive and an antiwear agent thereto in respective given amounts, and sufficiently stirring the mixture with a kneader, roll mill, or the like to evenly disperse the ingredients. It is also effective to conduct heating during the treatment. In the case of adding other additives, it is preferred to add these additives simultaneously with the rust preventive and the antiwear agent, from the standpoint of process efficiency.

[Rolling Device]

The present invention further provides a rolling device packed with the grease composition described above. There are no limitations on the rolling device, and the grease composition described above is applied to the lubrication portions of any of various rolling bearings, linear guide devices, and ball screw devices, besides hub unit bearings for vehicles, such as that shown in Fig. 1. This rolling device is excellent in terms of the various properties possessed by the grease composition, including water resistance. The grease composition shows excellent lubricating performance especially in environments where the rolling device comes into contact with water, and this rolling device has a prolonged life.

Examples

The invention will be further explained below by reference to Examples and Comparative Examples, but the

invention should not be construed as being limited by the following Examples in any way.

(EXAMPLES 1 TO 45 AND COMPARATIVE EXAMPLES 1 TO 18)

Grease compositions having the makeups shown in Table 1 were prepared. Each grease composition was subjected to the tests which will be shown later, i.e., (1) bearing torque test, (2) friction test, (3) Four-ball method extreme pressure properties (wear resistance test), (4) fretting resistance test, (5) rolling four-ball test (water resistance test), (6) grease leakage test, (7) low-temperature fretting test, and (8) high-temperature shelf test. These tests (1) to (8) will be roughly explained later, and the results of each test are given also in Table 1. Furthermore, each grease composition was examined for (9) projected-area proportion of thickener, (10) base-oil permittivity, and (11) ratio of oil film thickness. The results thereof are also given in Table 1.

In the section "Base oil" in Table 1, "Mineral oil M1" is a mineral oil having a kinematic viscosity at 40°C of 30 $mm^2/s$; "Mineral oil M2" is a mineral oil having a kinematic viscosity at 40°C of 70 $mm^2/s$; "Mineral oil M3" is a mineral oil having a kinematic viscosity at 40°C of 75 $mm^2/s$; "Mineral oil M4" is a mineral oil having a kinematic viscosity at 40°C of 100 $mm^2/s$; "Mineral oil M5" is a mineral oil having a kinematic viscosity at 40°C of 130 $mm^2/s$; and "Mineral oil M6" is a mineral oil having a kinematic viscosity at 40°C of 150 $mm^2/s$.

In the section "Base oil" in Table 1, "Poly($\alpha$-olefin) oil P1" is a poly($\alpha$-olefin) oil having a kinematic viscosity at 40°C of 30 $mm^2/s$; "Poly($\alpha$-olefin) oil P2" is a poly($\alpha$-olefin) oil having a kinematic viscosity at 40°C of 70 $mm^2/s$; "Poly($\alpha$-olefin) oil P3" is a poly($\alpha$-olefin) oil having a kinematic viscosity at 40°C of 75 $mm^2/s$; "Poly($\alpha$-olefin) oil P4" is a poly($\alpha$-olefin) oil having a kinematic viscosity at 40°C of 100 $mm^2/s$; "Poly($\alpha$-olefin) oil P5" is a poly($\alpha$-olefin) oil having a kinematic viscosity at 40°C of 130 $mm^2/s$; "Poly($\alpha$-olefin) oil P6" is a poly($\alpha$-olefin) oil having a kinematic viscosity at 40°C of 150 $mm^2/s$; and "Poly($\alpha$-olefin) oil P7" is a poly($\alpha$-olefin) oil having a kinematic viscosity at 40°C of 400 $mm^2/s$.

In the section "Base oil" in Table 1, "Ester oil ES1" is an ester oil having a kinematic viscosity at 40°C of 30 $mm^2/s$; "Ester oil ES2" is an ester oil having a kinematic viscosity at 40°C of 70 $mm^2/s$; "Ester oil ES3" is an ester oil having a kinematic viscosity at 40°C of 75 $mm^2/s$; "Ester oil ES4" is an ester oil having a kinematic viscosity at 40°C of 100 $mm^2/s$; "Ester oil ES5" is an ester oil having a kinematic viscosity at 40°C of 130 $mm^2/s$; "Ester oil ES6" is an ester oil having a kinematic viscosity at 40°C of 150 $mm^2/s$; and "Ester oil ES7" is an ester oil having a kinematic viscosity at 40°C of 400 $mm^2/s$.

In the section "Base oil" in Table 16, "Ether oil ET1" is an ether oil having a kinematic viscosity at 40°C of 30 $mm^2/s$; "Ether oil ET2" is an ether oil having a kinematic viscosity at 40°C of 70 $mm^2/s$; "Ether oil ET3" is an ether oil having a kinematic viscosity at 40°C of 75 $mm^2/s$; "Ether oil ET4" is an ether oil having a kinematic viscosity at 40°C of 100 $mm^2/s$; "Ether oil ET5" is an ether oil having a kinematic viscosity at 40°C of 130 $mm^2/s$; and "Ether oil ET6" is an ether oil having a kinematic viscosity at 40°C of 400 $mm^2/s$. Further, "Glycol oil G" is a polyglycol oil having a kinematic viscosity at 40°C of 75 $mm^2/s$.

Here, the pressure-viscosity coefficients at 40°C of the base oils used in the Examples and Comparative Examples were calculated using the So-Klaus prediction formula.

Furthermore, in the section "Thickener" in Table 1, "Aromatic diurea" is a diurea compound yielded by the reaction of 4,4'-diphenylmethane diisocyanate with p-toluidine; "Alicyclic diurea" is a diurea compound yielded by the reaction of 4,4'-diphenylmethane diisocyanate with cyclohexylamine; and "Aliphatic diurea" is a diurea compound yielded by the reaction of 4,4'-diphenylmethane diisocyanate with stearylamine.

Incidentally, the consistency of each grease composition in Table 1 was adjusted to NLGI (National Lubricating Grease Institute) No. 2.

(1) Bearing Torque Test

Each grease composition shown in Table 1 was packed into a single-row deep-groove ball bearing (inner diameter, 17 mm; outer diameter, 40 mm; width 12 mm) equipped with a non-contact seal. Thus, test bearings were produced. The test bearings were rotated for 600 seconds at a rotation speed of 450 r/min, an axial load of 392 N, and a radial load of 29.4 N and then examined for rotation torque. With respect to evaluation criteria, each measured torque value was expressed as a value relative to that for Comparative Example 1; the grease compositions packed into the test bearings in which the relative torque value was less than 1.0 were rated as acceptable. The results of the evaluation are shown in Table 1. The test bearings of Comparative Examples 1 to 13 each had a relative torque value of 1.0 or higher, whereas the test bearings of Examples 1 to 45 each had a relative torque value less than 1.0 and met the criterion for acceptance.

(2) Friction Test

The coefficient of sliding friction of each grease composition was measured with a ball-on-disk tester. For the

test piece, use was made of a 3/8-inch ball and mirror-finished SUJ2 as a disk. The test conditions were as follows. Each grease composition was applied to the disk in a thickness of 0.5 mm, and a test was conducted at a vertical load of 4.9 N and a sliding velocity of 1 m/s. The values of the coefficient of friction measured during the one-second period from the time when 1 second had passed since initiation of the test to the time when 2 seconds have passed since the test initiation were averaged to determine the coefficient of friction of each grease composition. With respect to evaluation criteria, each determined coefficient value was expressed as a coefficient of friction relative to that for Comparative Example 1; the grease compositions in which the relative coefficient of friction was 1.0 or less were rated as acceptable. The results of the evaluation are shown in Table 1. The grease compositions of Examples 1 to 45 each had a relative coefficient of friction of 1.0 or less and met the criterion for acceptance.

(3) Four-ball method extreme pressure properties (wear resistance test)

The wear resistance brought above by each grease composition was evaluated through the Four-ball method extreme pressure properties provided for in ASTM D2596 in the following manner. Three stationary balls were fixed, in a regular triangle arrangement, to the inside of a test vessel filled with each grease composition, and one rotating ball attached to a rotary shaft was placed in the depression formed by the three steel balls. The rotating ball was rotated at 1,770 $min^{-1}$ for 10 seconds while applying a certain load thereto, and the resultant wear marks formed on the stationary balls were examined. The load (last nonseizure load) at which the average diameter of the wear marks became smaller than the compensating wear mark diameter shown in ASTM D 2596 was determined. Furthermore, the rotating ball was likewise rotated, and the load at which welding occurred (weld point) was determined. The wear resistance was evaluated in terms of the last nonseizure load (L.N.S.L.) and the weld point (W.P.). Values of last nonseizure load of 490 N and higher and values of weld point of 1,236 N and higher were rated as acceptable (good). The results of the evaluation are shown in Table 1.

(4) Fretting Resistance Test

Each grease composition was subjected to a fretting resistance test by the test method provided for in ASTM D4170. The differences in mass between before and after the test were determined and grouped according to the following three ranks. Rank A and rank B are regarded as preferred for use in motor vehicles, and rank A and rank B were rated as acceptable in this test also. The results of the evaluation are shown in Table 1.

Rank A: The loss in mass was 3 mg or less.
Rank B: The loss in mass was larger than 3 mg but less than 5 mg.
Rank C: The loss in mass was 5 mg or more.

(5) Rolling Four-ball Test (water resistance test)

The water resistance of each grease composition was evaluated through a rolling four-ball test in the following manner. Three steel balls for bearings each having a diameter of 15 mm were prepared, and were placed, in a regular triangle arrangement, in a cylindrical vessel having a bottom inner diameter of 36.0 mm, an upper-end inner diameter of 31.63 mm, and a depth of 10.98 mm A mixture of each grease composition with 20% water was applied thereto in an amount of 20 g, and one steel ball for bearings which had a diameter of 5/8 inch was placed in the depression formed by the three steel balls. At room temperature, the steel ball for bearings having a diameter of 5/8 inch was rotated at 1,000 $min^{-1}$ while applying thereto a load of 4.1 GPa in terms of areal pressure. Although the three steel balls for bearings each having a diameter of 15 mm also revolved around the axis of the vessel while rotating on their centers, the 5/8-inch steel ball was continuously rotated until peeling occurred. The total number of rotations at the time when peeling had occurred was taken as the life. The results of the evaluation are shown in Table 1.

(6) Grease Leakage Test

Each grease composition was packed into a single-row deep-groove ball bearing (inner diameter, 25 mm; outer diameter, 62 mm; width, 17 mm) equipped with a non-contact seal, and this ball bearing was continuously rotated for 20 hours at an outer-ring temperature of 80°C, an axial load of 98 N, a radial load of 98 N, and a rotation speed of 5,000 $min^{-1}$. The degree of leakage of the grease composition (grease leakage test) was determined from the difference in the mass of the grease composition between before and after the rotation. The results of the evaluation are shown in Table 1. The evaluation through the grease leakage test was made in terms of the degree of leakage relative to the result of the grease leakage test of the grease composition (the degree of leakage of the grease composition) of Comparative Example 1, the result being taken as 1. The grease compositions having a relative degree of leakage of 2.0 or

less were rated as acceptable, and the grease compositions having a relative degree of leakage less than 2.0 were rated as unacceptable.

(7) Low-temperature Fretting Test

Each grease composition was subjected to a low-temperature fretting test using SNR-FEB2 test (load, 8,000 N; 5 hours; oscillating angle, 6°; oscillation cycle, 24 Hz; temperature, -20°C). The differences in mass between before and after the test were determined and grouped according to the following three ranks. Rank A and rank B are regarded as preferred for use in motor vehicles, and rank A and rank B were rated as acceptable in this test also. The results of the evaluation are shown in Table 1.

Rank A: The loss in mass was 20 mg or less.
Rank B: The loss in mass was larger than 20 mg but less than 50 mg.
Rank C: The loss in mass was 50 mg or more.

(8) High-temperature Shelf Test (thermal stability test)

Each grease composition was applied to a metal plate in a thickness of 2 mm, and this metal plate was allowed to stand in a 150°C thermostatic chamber for 200 hours. Thereafter, the grease composition was examined for total acid value with potassium hydroxide, and the difference between this total acid value and the total acid value of the grease composition which had not undergone the constant-temperature standing was calculated. The more the oxidation of a grease has proceeded, the larger the value of that difference. Greases in which that difference is large can be regarded as having deteriorated. In this Example, the grease compositions which showed a decrease in total acid value (negative value) were rated as acceptable. The results of the evaluation are shown in Table 1.

(9) Projected-area Proportion of Thickener

Each grease composition was applied to a slide glass in a thickness of 0.1 mm, and a photograph thereof was taken with an optical microscope (OLYMPUS, BX51) using an optical 5-power magnifying lens. The image was processed, and the black portions were regarded as the thickener and the white portions as the base oil. The areal proportion (% by area) of the black portions (thickener) in the field of view was calculated. The results of the evaluation are shown in Table 1.

(10) Base-oil Permittivity

The permittivity of the base oil of each grease composition was measured using an LCR meter. The measured values were ones obtained at 1 MHz. The results of the evaluation are shown in Table 1.

(11) Ratio of Oil Film Thickness

Ratio of oil film thickness was determined in the following manner. Using a ball-on-disk tester (room temperature; areal pressure, 0.5 GPa; rolling velocity, 0.1 m/s), the base oil and the grease composition were examined for oil film thickness by the light interference method. The ratio of the thickness of the oil film of the grease composition to the thickness of the oil film of the base oil was determined as the ratio of oil film thickness. The results of the evaluation are shown in Table 1.
[Table 1]

Table 1

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 |
|---|---|---|---|---|---|---|---|---|---|---|---|---|---|---|---|---|---|---|
| Base oil | Mineral oil M1 | | | | | | | | | | | | | | | | | |
| | Mineral oil M2 | | | | | | 20 | | | | | | | | | | | |
| | Mineral oil M3 | | | | 20 | | | | 20 | 20 | | | 20 | 20 | | | | |
| | Mineral oil M4 | | | | | | | | | | | | | | | | | |
| | Mineral oil M5 | | | | | | | | | | 20 | | | | | | | |
| | Mineral oil M6 | | | | | | | 20 | | | | | | | | | | |
| | Poly(α-olefin) oil P1 | | | | | | | | | | | | | | | | | |
| | Poly(α-olefin) oil P2 | | | | | | 80 | | | | | | | | | | | |
| | Poly(α-olefin) oil P3 | 100 | | | 80 | 100 | | | 80 | 80 | | 100 | 80 | 80 | | 100 | | |
| | Poly(α-olefin) oil P4 | | 100 | | | | | | | | | | | | | | 100 | |
| | Poly(α-olefin) oil P5 | | | 100 | | | | | | | 80 | | | | | | | 100 |
| | Poly(α-olefin) oil P6 | | | | | | | 80 | | | | | | | | | | |
| | Poly(α-olefin) oil P7 | | | | | | | | | | | | | | | | | |
| | Ester oil ES1 | | | | | | | | | | | | | | | | | |
| | Ester oil ES2 | | | | | | | | | | | | | | | | | |
| | Ester oil ES3 | | | | | | | | | | | | | | | | | |
| | Ester oil ES4 | | | | | | | | | | | | | | | | | |
| | Ester oil ES5 | | | | | | | | | | | | | | | | | |
| | Ester oil ES6 | | | | | | | | | | | | | | | | | |
| | Ether oil ET1 | | | | | | | | | | | | | | | | | |
| | Ether oil ET2 | | | | | | | | | | | | | | | | | |
| | Ether oil ET3 | | | | | | | | | | | | | | 100 | | | |
| | Ether oil ET4 | | | | | | | | | | | | | | | | | |
| | Ether oil ET5 | | | | | | | | | | | | | | | | | |
| | Ether oil ET6 | | | | | | | | | | | | | | | | | |
| | Glycol oil G | | | | | | | | | | | | | | | | | |
| Thickener | Aromatic diurea | 18 | 18 | 18 | 18 | 30 | 18 | 18 | 18 | 40 | 18 | 10 | 18 | 18 | 18 | 18 | 18 | 18 |
| | Alicyclic diurea | | | | | | | | | | | | | | | | | |
| | Aliphatic diurea | | | | | | | | | | | | | | | | | |

Table 1 (continued)

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 |
|---|---|---|---|---|---|---|---|---|---|---|---|---|---|---|---|---|---|---|
| Antioxidant | p,p'-Dioctyldiphenylamine | 1 | 1 | 1 | 1 | 1 | 1 | 1 | 1 | 1 | 1 | 1 | 1 | 1 | 1 | | | |
| Rust preventive | Succinic acid half ester | 0.5 | 1 | 0.5 | 0.5 | 0.5 | 0.5 | 0.5 | 0.5 | 0.5 | 0.5 | 1 | 0.8 | 0.6 | 0.5 | | | |
| | Zinc naphthenate | 0.5 | 1 | 0.5 | 0.5 | 0.5 | 0.5 | 0.5 | 0.5 | 0.5 | 0.5 | 1 | 0.8 | 0.6 | 0.5 | | | |
| | Fatty acid amine salt | 2 | 1 | 2 | 2 | 2 | 2 | 2 | 2 | 2 | 2 | 1 | 0.8 | 0.6 | | | | |
| | Barium sulfonate | - | - | - | - | - | - | - | | | | | | | | | | |
| Antiwear agent | Triphenyl phosphorothioate | 0.5 | 1 | 0.5 | 0.5 | 0.5 | 0.5 | 0.5 | 0.5 | 0.5 | 0.5 | 0.5 | 0.5 | 0.5 | 0.5 | | | |
| Kinematic viscosity of base oil (40°C), $mm^2/s$ | | 75 | 100 | 130 | 75 | 75 | 70 | 150 | 75 | 75 | 130 | 75 | 75 | 75 | 75 | 75 | 100 | 130 |
| Viscosity index of base oil | | 138 | 139 | 140 | 131 | 138 | 131 | 121 | 131 | 131 | 125 | 138 | 131 | 131 | 118 | 138 | 139 | 140 |
| Pour point of base oil, °C | | -55 | -52 | -50 | -45 | -55 | -57 | -50 | -55 | -55 | -40 | -55 | -45 | -40 | -42 | -55 | -52 | -50 |
| Pressure-viscosity coefficient at 40°C | | 27 | 29 | 31 | 27 | 27 | 27 | 33 | 27 | 27 | 31 | 27 | 27 | 27 | 28 | 27 | 29 | 31 |
| Projected-area proportion of thickener, area % | | 16 | 16 | 14 | 11 | 14 | 11 | 11 | 11 | 12 | 11 | 13 | 11 | 11 | 12 | 13 | 13 | 13 |
| Permittivity of base oil | | 1.9 | 1.9 | 1.9 | 2 | 1.9 | 2 | 2 | 2 | 2 | 2 | 1.9 | 2 | 2.1 | 2.4 | 1.9 | 1.9 | 1.9 |
| Bearing torque ratio | | 0.5 | 0.7 | 0.9 | 0.6 | 0.6 | 0.6 | 0.9 | 0.6 | 0.9 | 0.9 | 0.6 | 0.8 | 0.9 | 0.8 | 0.5 | 0.7 | 0.9 |
| Fretting resistance test | | A | A | B | B | A | A | A | A | B | B | A | A | A | B | B | B | B |
| Low-temperature fretting test | | A | A | A | A | A | A | A | A | A | B | A | B | B | B | A | A | A |
| Rolling 4-ball test (×1000 rotations) | | 1650 | 1750 | 1800 | 1500 | 1600 | 1600 | 1800 | 1650 | 1450 | 1500 | 1650 | 1500 | 1500 | 1450 | 1000 | 1100 | 1100 |
| Friction test (ball-on-disk, 1 m/s) | | 0.7 | 0.7 | 0.8 | 0.8 | 0.8 | 0.8 | 0.9 | 0.8 | 0.8 | 0.9 | 0.7 | 0.8 | 0.9 | 0.8 | 0.6 | 0.7 | 0.8 |
| Grease leakage test | | 1 | 1 | 0.9 | 1 | 0.5 | 1.1 | 1 | 1 | 0.3 | 0.9 | 2 | 1.8 | 1.8 | 1 | 1 | 1 | 0.9 |
| Four-ball method extreme pressure properties | Last nonseizure load (L.N.S.L.) | good | good | good | good | good | good | good | good | good | good | good | good | good | good | NG | NG | good |
| | Weld point (W.P.) | good | good | good | good | good | good | good | good | good | good | good | good | good | good | NG | NG | good |
| Increase in total acid value through high-temperature shelf, mgKOH/g | | -2.7 | -2.7 | -2.7 | -2.5 | -2.7 | -2.5 | -2.5 | -2.5 | -2.5 | -2.5 | -2.7 | -2.2 | -1.7 | 1.1 | 1.2 | 1 | 0.9 |
| Ratio of oil film thickness | | 15.0 | 12.0 | 11.0 | 11.0 | 15.0 | 12.0 | 11.0 | 11.0 | 11.0 | 9.5 | 12.0 | 11.0 | 11.0 | 15.0 | 15.0 | 12.0 | 11.0 |

[Table 2]

Table 1 (continued)

| | | Example 18 | Example 19 | Example 20 | Example 21 | Example 22 | Example 23 | Example 24 | Example 25 | Example 26 | Example 27 | Example 28 | Example 29 | Example 30 | Example 31 | Example 32 | Example 33 | Example 34 |
|---|---|---|---|---|---|---|---|---|---|---|---|---|---|---|---|---|---|---|
| Base oil | Mineral oil M1 | | | | | | | | | | | | | | | | | |
| | Mineral oil M2 | | | 20 | | | | | | | | | | | 20 | | | |
| | Mineral oil M3 | 20 | | | | 20 | 20 | | | | | | 20 | | | 20 | 20 | |
| | Mineral oil M4 | | | | | | | | | | | | | | | | | |
| | Mineral oil M5 | | | | | | | 20 | | | | | | | | | | |
| | Mineral oil M6 | | | | 20 | | | | | | | | | | | | | |
| | Poly(α-olefin) oil P1 | | | | | | | | | | | | | | | | | |
| | Poly(α-olefin) oil P2 | | | 80 | | | | | | | | | | | | | | |
| | Poly(α-olefin) oil P3 | 80 | 100 | | | 80 | 80 | | 100 | | | | | | | | | |
| | Poly(α-olefin) oil P4 | | | | | | | | | | | | | | | | | |
| | Poly(α-olefin) oil P5 | | | | | | | 80 | | | | | | | | | | |
| | Poly(α-olefin) oil P6 | | | | 80 | | | | | | | | | | | | | |
| | Poly(α-olefin) oil P7 | | | | | | | | | | | | | | | | | |
| | Ester oil ES1 | | | | | | | | | | | | | | | | | |
| | Ester oil ES2 | | | | | | | | | | | | | | 80 | | | |
| | Ester oil ES3 | | | | | | | | | 100 | | | 80 | 100 | | 80 | 80 | 100 |
| | Ester oil ES4 | | | | | | | | | | 100 | | | | | | | |
| | Ester oil ES5 | | | | | | | | | | | 100 | | | | | | |
| | Ester oil ES6 | | | | | | | | | | | | | | | | | |
| | Ether oil ET1 | | | | | | | | | | | | | | | | | |
| | Ether oil ET2 | | | | | | | | | | | | | | | | | |
| | Ether oil ET3 | | | | | | | | | | | | | | | | | |
| | Ether oil ET4 | | | | | | | | | | | | | | | | | |
| | Ether oil ET5 | | | | | | | | | | | | | | | | | |
| | Ether oil ET6 | | | | | | | | | | | | | | | | | |
| | Glycol oil G | | | | | | | | | | | | | | | | | |

Table 1 (continued)

| | | Example 18 | Example 19 | Example 20 | Example 21 | Example 22 | Example 23 | Example 24 | Example 25 | Example 26 | Example 27 | Example 28 | Example 29 | Example 30 | Example 31 | Example 32 | Example 33 | Example 34 |
|---|---|---|---|---|---|---|---|---|---|---|---|---|---|---|---|---|---|---|
| Thickener | Aromatic diurea | 18 | 30 | 18 | 18 | 18 | 40 | 18 | 10 | 18 | 18 | 18 | 18 | 30 | 18 | 18 | 40 | 10 |
| | Alicyclic diurea | | | | | | | | | | | | | | | | | |
| | Aliphatic diurea | | | | | | | | | | | | | | | | | |
| Antioxidant | p,p'-Dioctyldiphenylamine | | | | | | | | | | | | | | | | | |
| Rust preventive | Succinic acid half ester | | | | | | | | | | | | | | | | | |
| | Zinc naphthenate | | | | | | | | | | | | | | | | | |
| | Fatty acid amine salt | | | | | | | | | | | | | | | | | |
| | Barium sulfonate | | | | | | | | | | | | | | | | | |
| Antiwear agent | Triphenyl phosphorothioate | | | | | | | | | | | | | | | | | |
| Kinematic viscosity of base oil (40°C), $mm^2/s$ | | 75 | 75 | 70 | 150 | 75 | 75 | 130 | 75 | 75 | 100 | 130 | 75 | 75 | 70 | 75 | 75 | 75 |
| Viscosity index of base oil | | 131 | 138 | 131 | 121 | 131 | 131 | 125 | 138 | 188 | 189 | 190 | 170 | 188 | 168 | 170 | 170 | 188 |
| Pour point of base oil, °C | | -45 | -55 | -57 | -50 | -55 | -55 | -40 | -55 | -43 | -42 | -35 | -35 | -43 | -37 | -35 | -35 | -43 |
| Pressure-viscosity coefficient at 40°C | | 27 | 27 | 27 | 33 | 27 | 27 | 31 | 27 | 23 | 24 | 25 | 25 | 23 | 25 | 25 | 25 | 23 |
| Projected-area proportion of thickener, area % | | 11 | 13 | 11 | 11 | 11 | 14 | 10 | 13 | 12 | 12 | 12 | 11 | 12 | 11 | 11 | 12 | 12 |
| Permittivity of base oil | | 2 | 1.9 | 2 | 2 | 2 | 2 | 2 | 1.9 | 3.1 | 3.1 | 3.1 | 2.8 | 3.1 | 2.8 | 2.8 | 2.8 | 3.1 |
| Bearing torque ratio | | 0.6 | 0.6 | 0.6 | 0.9 | 0.6 | 0.9 | 0.9 | 0.6 | 0.6 | 0.7 | 0.8 | 0.8 | 0.6 | 0.8 | 0.8 | 0.8 | 0.6 |
| Fretting resistance test | | B | B | B | B | B | B | B | B | B | B | B | B | B | B | B | B | B |
| Low-temperature fretting test | | A | A | A | A | A | A | B | A | B | B | B | B | B | B | B | B | B |
| Rolling 4-ball test (×1000 rotations) | | 700 | 1000 | 700 | 600 | 600 | 600 | 700 | 1100 | 900 | 1000 | 1000 | 600 | 900 | 600 | 600 | 600 | 1000 |
| Friction test (ball-on-disk, 1 m/s) | | 0.8 | 0.8 | 0.8 | 0.9 | 0.8 | 0.8 | 0.9 | 0.7 | 0.8 | 0.8 | 0.8 | 1 | 0.8 | 1 | 1 | 1 | 0.8 |
| Grease leakage test | | 1 | 0.5 | 1.1 | 1 | 1 | 0.3 | 0.9 | 2 | 0.9 | 0.9 | 0.8 | 0.8 | 0.9 | 0.8 | 0.8 | 0.3 | 1.8 |
| Four-ball method extreme pressure properties | Last nonseizure load (L.N.S.L.) | NG | NG | NG | good | NG | NG | good | NG | NG | NG | good | NG | NG | NG | NG | NG | NG |
| | Weld point (W.P.) | NG | NG | NG | good | NG | NG | good | NG | NG | NG | good | NG | NG | NG | NG | NG | NG |
| Increase in total acid value through high-temperature shelf, mgKOH/g | | 2 | 1 | 2 | 1.5 | 1.5 | 1.5 | 1.5 | 1.2 | 1.5 | 1 | 0.9 | 2 | 1 | 2 | 1.5 | 1.5 | 1.2 |
| Ratio of oil film thickness | | 11.0 | 15.0 | 12.0 | 8.5 | 10.0 | 12.0 | 9.5 | 13.0 | 13.0 | 12.0 | 11.0 | 11.0 | 13.0 | 12.0 | 10.0 | 12.0 | 13.0 |

[Table 3]

Table 1 (continued)

| | | Example 35 | Example 36 | Example 37 | Example 38 | Example 39 | Example 40 | Example 41 | Example 42 | Example 43 | Example 44 | Example 45 |
|---|---|---|---|---|---|---|---|---|---|---|---|---|
| Base oil | Mineral oil M1 | | | | | | | | | | | |
| | Mineral oil M2 | | | | | | 20 | | | | | |
| | Mineral oil M3 | | | | 20 | | | 20 | 20 | | | |
| | Mineral oil M4 | | | | | | | | | | | |
| | Mineral oil M5 | | | | | | | | | | | |
| | Mineral oil M6 | | | | | | | | | | | |
| | Poly(α-olefin) oil P1 | | | | | | | | | | | |
| | Poly(α-olefin) oil P2 | | | | | | | | | | | |
| | Poly(α-olefin) oil P3 | | | | | | | | | | 100 | 100 |
| | Poly(α-olefin) oil P4 | | | | | | | | | | | |
| | Poly(α-olefin) oil P5 | | | | | | | | | | | |
| | Poly(α-olefin) oil P6 | | | | | | | | | | | |
| | Poly(α-olefin) oil P7 | | | | | | | | | | | |
| | Ester oil ES1 | | | | | | | | | | | |
| | Ester oil ES2 | | | | | | | | | | | |
| | Ester oil ES3 | | | | | | | | | | | |
| | Ester oil ES4 | | | | | | | | | | | |
| | Ester oil ES5 | | | | | | | | | | | |
| | Ester oil ES6 | | | | | | | | | | | |
| | Ether oil ET1 | | | | | | | | | | | |
| | Ether oil ET2 | | | | | | 80 | | | | | |
| | Ether oil ET3 | 100 | | | 80 | 100 | | 80 | 80 | 100 | | |
| | Ether oil ET4 | | 100 | | | | | | | | | |
| | Ether oil ET5 | | | 100 | | | | | | | | |
| | Ether oil ET6 | | | | | | | | | | | |
| | Glycol oil G | | | | | | | | | | | |

Table 1 (continued)

| | | Example 35 | Example 36 | Example 37 | Example 38 | Example 39 | Example 40 | Example 41 | Example 42 | Example 43 | Example 44 | Example 45 |
|---|---|---|---|---|---|---|---|---|---|---|---|---|
| Thickener | Aromatic diurea | 18 | 18 | 18 | 18 | 30 | 18 | 18 | 40 | 10 | 16 | 16 |
| | Alicyclic diurea | | | | | | | | | | 2 | |
| | Aliphatic diurea | | | | | | | | | | | 2 |
| Antioxidant | p,p'-Dioctyldiphenylamine | | | | | | | | | | | |
| Rust preventive | Succinic acid half ester | | | | | | | | | | | |
| | Zinc naphthenate | | | | | | | | | | | |
| | Fatty acid amine salt | | | | | | | | | | | |
| | Barium sulfonate | | | | | | | | | | | |
| Antiwear agent | Triphenyl phosphorothioate | | | | | | | | | | | |
| Kinematic viscosity of base oil (40°C), $mm^2/s$ | | 75 | 100 | 130 | 75 | 75 | 70 | 75 | 75 | 75 | 75 | 75 |
| Viscosity index of base oil | | 118 | 118 | 118 | 115 | 118 | 115 | 115 | 115 | 118 | 138 | 138 |
| Pour point of base oil, °C | | -42 | -40 | -35 | -35 | -42 | -38 | -35 | -35 | -42 | -55 | -55 |
| Pressure-viscosity coefficient at 40°C | | 26 | 29 | 33 | 26 | 26 | 26 | 26 | 26 | 26 | 27 | 27 |
| Projected-area proportion of thickener, area % | | 13 | 13 | 13 | 11 | 13 | 11 | 11 | 14 | 13 | 13 | 13 |
| Permittivity of base oil | | 2.4 | 2.4 | 2.4 | 2.3 | 2.4 | 2.3 | 2.3 | 2.3 | 2.4 | 1.9 | 1.9 |
| Bearing torque ratio | | 0.8 | 0.9 | 0.9 | 0.9 | 0.8 | 0.9 | 0.9 | 0.9 | 0.8 | 0.6 | 0.6 |
| Fretting resistance test | | B | B | B | B | B | B | B | B | B | B | B |
| Low-temperature fretting test | | B | B | B | B | B | B | B | B | B | A | A |
| Rolling 4-ball test (×1000 rotations) | | 1000 | 1100 | 1100 | 700 | 1000 | 700 | 600 | 600 | 1100 | 1000 | 1000 |
| Friction test (ball-on-disk, 1 m/s) | | 0.9 | 0.9 | 1 | 1 | 0.8 | 1 | 1 | 1 | 0.8 | 0.7 | 0.7 |
| Grease leakage test | | 0.9 | 0.9 | 0.8 | 0.8 | 0.9 | 0.8 | 0.8 | 0.4 | 1.9 | 1 | 1 |
| Four-ball method extreme pressure properties | Last nonseizure load (L.N.S.L.) | NG | NG | NG | NG | NG | NG | NG | NG | NG | NG | NG |
| | Weld point (W.P.) | NG | NG | NG | NG | NG | NG | NG | NG | NG | NG | NG |
| Increase in total acid value through high-temperature shelf, mgKOH/g | | 0.9 | 1 | 1 | 2 | 1 | 2 | 1.5 | 1.5 | 1.2 | 1.2 | 1.2 |
| Ratio of oil film thickness | | 15.0 | 12.0 | 11.0 | 11.0 | 13.0 | 12.0 | 10.0 | 12.0 | 13.0 | 12.0 | 12.0 |

[Table 4]

Table 1 (continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 | Comparative Example 18 |
|---|---|---|---|---|---|---|---|---|---|---|---|---|---|---|---|---|---|---|---|
| Base oil | Mineral oil M1 | | | | | | | | | | | | | | 100 | | | | |
| | Mineral oil M2 | | 100 | | | | | | | | | | | | | | | | |
| | Mineral oil M3 | 100 | | | | | | | | 80 | 80 | 100 | | | | | | | 20 |
| | Mineral oil M4 | | | | | 80 | | | | | | | | | | | | | |
| | Mineral oil M5 | | | 100 | | | | | | | | | | | | | | | |
| | Mineral oil M6 | | | | | | | | | | | | | | | | | | |
| | Poly(α-olefin) oil P1 | | | | | | | | | | | | | | | | | | |
| | Poly(α-olefin) oil P2 | | | | | | | | | | | | | | | | | | |
| | Poly(α-olefin) oil P3 | | | | | | 100 | 100 | | 20 | 20 | | | | | | 100 | 100 | 80 |
| | Poly(α-olefin) oil P4 | | | | | 20 | | | | | | | | | | | | | |
| | Poly(α-olefin) oil P5 | | | | | | | | 100 | | | | | | | | | | |
| | Poly(α-olefin) oil P6 | | | | | | | | | | | | | | | | | | |
| | Poly(α-olefin) oil P7 | | | | 100 | | | | | | | | | | | | | | |
| | Ester oil ES1 | | | | | | | | | | | | | | | | | | |
| | Ester oil ES2 | | | | | | | | | | | | | | | | | | |
| | Ester oil ES3 | | | | | | | | | | | | | | | | | | |
| | Ester oil ES4 | | | | | | | | | | | | | | | | | | |
| | Ester oil ES5 | | | | | | | | | | | | | | | | | | |
| | Ester oil ES6 | | | | | | | | | | | | 100 | | | | | | |
| | Ether oil ET1 | | | | | | | | | | | | | | | | | | |
| | Ether oil ET2 | | | | | | | | | | | | | | | | | | |
| | Ether oil ET3 | | | | | | | | | | | | | | | | | | |
| | Ether oil ET4 | | | | | | | | | | | | | | | | | | |
| | Ether oil ET5 | | | | | | | | | | | | | | | | | | |
| | Ether oil ET6 | | | | | | | | | | | | | 100 | | | | | |
| | Glycol oil G | | | | | | | | | | | | | | | 100 | | | |

Table 1 (continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 | Comparative Example 18 |
|---|---|---|---|---|---|---|---|---|---|---|---|---|---|---|---|---|---|---|---|
| Thickener | Aromatic diurea | 18 | 18 | 18 | 18 | 18 | | | | 18 | 18 | 18 | 18 | 18 | 18 | 18 | 3 | 3 | 18 |
| | Alicyclic diurea | | | | | | | 45 | 4 | | | | | | | | 15 | | |
| | Aliphatic diurea | | | | | | 30 | | 15 | | | | | | | | | 12 | |
| Antioxidant | p,p'-Dioctyldiphenylamine | | | | 1 | 1 | 1 | 1 | | 1 | 1 | 1 | | | | | | | |
| Rust preventive | Succinic acid half ester | | | | 1 | 1 | 1 | 1 | | 0.2 | 5 | 0.5 | | | | | | | |
| | Zinc naphthenate | | | | 1 | 1 | 1 | 1 | | 0.2 | 5 | 0.5 | | | | | | | |
| | Fatty acid amine salt | | | | 1 | 1 | 1 | 1 | | 0.2 | 5 | 2 | | | | | | | |
| | Barium sulfonate | | 1 | 1 | | | | | | | | | | | 1 | | | | |
| Antiwear agent | Triphenyl phosphorothioate | | | | 1 | 1 | 1 | 1 | | 1 | 1 | 1 | | | | | | | |
| Kinematic viscosity of base oil (40°C), $mm^2/s$ | | 100 | 75 | 130 | 400 | 100 | 75 | 75 | 130 | 75 | 75 | 100 | 400 | 400 | 30 | 75 | 75 | 75 | 75 |
| Viscosity index of base oil | | 100 | 98 | 102 | 150 | 105 | 138 | 138 | 140 | 105 | 105 | 100 | 150 | 91 | 98 | 195 | 138 | 138 | 131 |
| Pour point of base oil, °C | | -10 | -10 | -10 | -34 | -35 | -55 | -55 | -50 | -35 | -35 | -10 | -30 | -20 | -10 | -45 | -55 | -55 | -55 |
| Pressure-viscosity coefficient at 40°C | | 29 | 29 | 34 | 43 | 31 | 27 | 27 | 31 | 27 | 27 | 29 | 37 | 38 | 22 | 21 | 27 | 27 | 27 |
| Projected-area proportion of thickener, area % | | 7 | 7 | 7 | 11 | 8 | 2 | 5 | 3 | 8 | 8 | 7 | 11 | 12 | 7 | 1 | 3 | 4 | 4 |
| Permittivity of base oil | | 2.3 | 2.3 | 2.3 | 1.9 | 2.2 | 1.9 | 1.9 | 1.9 | 2.2 | 2.2 | 2.2 | 3.1 | 2.4 | 2.3 | 5.3 | 1.9 | 1.9 | 2 |
| Bearing torque ratio | | 1 | 1 | 1 | 1.2 | 1 | 1.3 | 1.1 | 1 | 1 | 1.1 | 1 | 1.2 | 1.3 | 0.8 | 0.9 | 0.6 | 0.6 | 0.6 |
| Fretting resistance test | | C | C | C | C | C | C | B | C | C | C | B | C | C | B | B | B | B | B |
| Low-temperature fretting test | | C | C | C | C | B | C | C | C | B | B | B | C | C | C | B | B | B | B |
| Rolling 4-ball test (×1000 rotations) | | 150 | 650 | 800 | 1500 | 1300 | 100 | 300 | 1000 | 600 | 1400 | 1300 | 1400 | 1500 | 150 | 500 | 700 | 800 | 600 |
| Friction test (ball-on-disk, 1 m/s) | | 1 | 1 | 1 | 1.1 | 1 | 1.3 | 1.2 | 1 | 1 | 1.1 | 1 | 1.1 | 1.2 | 0.9 | 0.9 | 0.5 | 0.5 | 0.8 |
| Grease leakage test | | 1 | 1 | 1 | 0.9 | 1 | 0.4 | 0.2 | 0.7 | 1.8 | 2 | 1 | 0.7 | 0.7 | 1.1 | 1 | 0.8 | 0.8 | 1 |
| Four-ball method extreme pressure properties | Last nonseizure load (L.N.S.L.) | NG | NG | NG | good | good | NG | NG | NG | good | good | good | good | good | NG | NG | NG | NG | NG |
| | Weld point (W.P.) | NG | good | NG | good | good | NG | NG | NG | good | good | good | good | good | NG | NG | NG | NG | NG |
| Increase in total acid value through high-temperature shelf, mgKOH/g | | 1.9 | 1.9 | 1.9 | -2.7 | -2.3 | -2.7 | -2.7 | 1.2 | 0.6 | -2.2 | -2.3 | 1 | 0.9 | 1.9 | 3.2 | 1.2 | 1.2 | 1.5 |
| Ratio of oil film thickness | | 4.5 | 4.5 | 4 | 10 | 5.1 | 4.5 | 6.2 | 7.3 | 5 | 5.1 | 4.5 | 7 | 8 | 5 | 2.5 | 5 | 4 | 10 |

As shown in Table 1, it can be seen that the grease compositions in which the pressure-viscosity coefficient at 40°C is 33 $GPa^{-1}$ or less and the projected-area proportion of the thickener is 10% by area or higher are excellent in terms of low-temperature fretting resistance, low-torque characteristics, oil film formation property, and non-leaking property after packing into bearings. In contrast, the grease compositions in which the base oil or the thickener does not satisfy that requirement show poor lubricating properties. It can be seen that such grease compositions hence gave results showing that the grease compositions are poor in any of torque characteristics, wear resistance, seizure resistance, and non-leaking property after packing into bearings.

Furthermore, it can be seen that the grease compositions each containing three kinds of rust preventives, i.e., a carboxylic acid-based rust inhibiting additive, a carboxylic acid salt-based rust inhibiting additive, and an amine-based rust preventive, and further containing an antiwear agent are excellent in terms of peeling resistance, wear resistance, fretting resistance, and corrosion resistance. It can also be seen that in contrast to those grease compositions, the grease compositions containing none of the three rust preventives, i.e., a carboxylic acid-based rust inhibiting additive, a carboxylic acid salt-based rust inhibiting additive, and an amine-based rust preventive, and containing a barium sulfonate as a rust preventive do not bring about sufficient peeling resistance and corrosion resistance. In particular, it was found that the carboxylic acid-based rust inhibiting additive, carboxylic acid salt-based rust inhibiting additive, and amine-based rust preventive have the function of inhibiting the total acid value from increasing. It can be further seen that the grease compositions containing no antiwear agent failed to bring about sufficient wear resistance. It can be furthermore seen that the grease compositions in which an aliphatic urea compound is used as a thickener are poor in fretting resistance.

Moreover, a relationship between the content of a rust preventive and the increase in total acid value was elucidated and, as a result, it was found that for providing a grease composition which decreases in total acid value, i.e., a grease composition having high thermal stability, it is necessary that the content (% by mass) of the rust preventive should be 1% by mass or higher based on the whole grease composition.

As described above, it is possible according to the invention to provide a grease composition which is excellent in terms of low-torque characteristics, wear resistance, low-temperature fretting resistance, water resistance, low-friction characteristics, and low-leakage characteristics after packing into bearings and which can maintain a satisfactory lubricating state over a long period.

While embodiments of the invention have been explained above, the invention should not be construed as being limited to those embodiments, and various modifications and improvements can be made.

This application is based on a Japanese patent application filed on August 26, 2011 (Application No. 2011-184987), a Japanese patent application filed on August 26, 2011 (Application No. 2011-184988), a Japanese patent application filed on September 26, 2011 (Application No. 2011-209410), a Japanese patent application filed on December 28, 2011 (Application No. 2011-289571), a Japanese patent application filed on December 28, 2011 (Application No. 2011-289572), and a Japanese patent application filed on May 22, 2012 (Application No. 2012-116841), the contents thereof being incorporated herein by reference.

Industrial Applicability

The present invention is useful in or as not only hub unit bearings for vehicles but also rolling devices such as various rolling bearings, linear guide devices, and ball screw devices, in particular, rolling devices for use in environments where the devices come into contact with water. Such rolling devices according to the invention are excellent in terms of various properties including water resistance.

Explanations of Reference Signs

| | |
|---|---|
| 1 | Inner-ring element |
| 2 | Hub |
| 4a, 4b | Inner ring raceway |
| 5 | Step |
| 6 | Male screw portion |
| 7 | Nut |
| 8 | Outer ring |
| 10a, 10b | Outer ring raceway |
| 11 | Rolling element |
| 12 | Cage |
| 13 | Seal ring |

## Claims

1. A grease composition **characterized by** comprising a base oil which has a pressure-viscosity coefficient as measured at 40°C of 33 $GPa^{-1}$ or less and a thickener which is contained in a projected-area proportion of 10% by area or higher.

2. A rolling device **characterized by** comprising an inner ring, an outer ring and a plurality of rolling elements freely rollably held between the inner ring and the outer ring by means of a cage, and by being packed with the grease composition according to claim 1.

FIG. 1

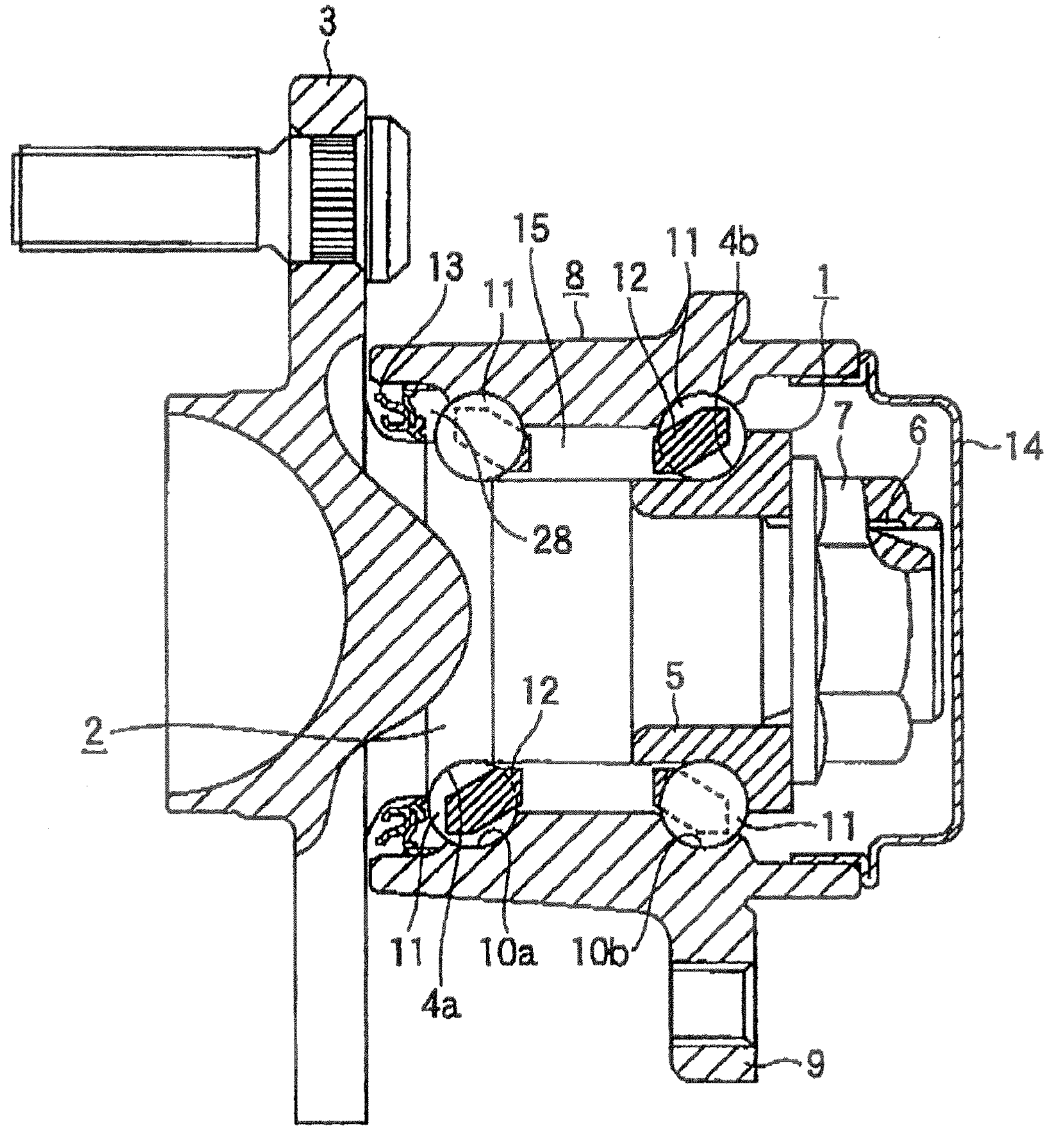

**INTERNATIONAL SEARCH REPORT**

International application No.
PCT/JP2012/071509

A. CLASSIFICATION OF SUBJECT MATTER
*C10M169/02*(2006.01)i, *C10M105/04*(2006.01)n, *C10M105/18*(2006.01)n, *C10M105/32*(2006.01)n, *C10M107/02*(2006.01)n, *C10M115/08*(2006.01)n, *C10N20/02*(2006.01)n, *C10N30/00*(2006.01)n, *C10N30/06*(2006.01)n,

According to International Patent Classification (IPC) or to both national classification and IPC

B. FIELDS SEARCHED

Minimum documentation searched (classification system followed by classification symbols)
C10M101/00-177/00, C10N50/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-124035 A (NTN Corp.), 22 April 2004 (22.04.2004), claims; examples & US 2004/0033911 A1 & EP 1388584 A1 & CN 1487063 A | 1,2 |
| X | JP 2004-331716 A (NTN Corp.), 25 November 2004 (25.11.2004), claims; examples (Family: none) | 1,2 |
| X | JP 5-263091 A (NTN Corp.), 12 October 1993 (12.10.1993), claims; examples & US 5301923 A & GB 2263482 A & KR 10-1997-0002552 B1 | 1,2 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 November, 2012 (09.11.12) | 20 November, 2012 (20.11.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2012/071509

C (Continuation). DOCUMENTS CONSIDERED TO BE RELEVANT

| Category* | Citation of document, with indication, where appropriate, of the relevant passages | Relevant to claim No. |
|---|---|---|
| X | JP 5-194979 A (NTN Corp.), 03 August 1993 (03.08.1993), claims; examples (Family: none) | 1,2 |
| X | WO 2006/001309 A1 (NSK Ltd.), 05 January 2006 (05.01.2006), claims; examples & US 2008/0271967 A1 & EP 1770309 A1 | 1,2 |
| X | JP 2006-349137 A (NSK Ltd.), 28 December 2006 (28.12.2006), claims; examples (Family: none) | 1,2 |
| X | JP 2008-121704 A (NTN Corp.), 29 May 2008 (29.05.2008), claims; examples (Family: none) | 1,2 |

Form PCT/ISA/210 (continuation of second sheet) (July 2009)

**INTERNATIONAL SEARCH REPORT**

International application No.
PCT/JP2012/071509

Continuation of A. CLASSIFICATION OF SUBJECT MATTER
(International Patent Classification (IPC))

*C10N40/02*(2006.01)n, *C10N50/10*(2006.01)n

(According to International Patent Classification (IPC) or to both national classification and IPC)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003239999 A
- JP 2011184987 A
- JP 2011184988 A
- JP 2011209410 A
- JP 2011289571 A
- JP 2011289572 A
- JP 2012116841 A